# EUROPEAN PATENT APPLICATION

(11) **EP 4 410 162 A1**
(43) Date of publication of application: **07.08.2024**
(21) Application number: 23155080.7
(22) Date of filing: 06.02.2023
(51) Int. Cl.: A47J 43/046, A47J 43/07

(54) **FOOD PROCESSOR WITH A WEIGHING FUNCTION**

(71) Applicant: Suntek Industries (Hong Kong) Company Limited, Shatin, New Territories (HK)
(72) Inventor: Poon, Ho Kai, Hong Kong (CN); Wong, Wing Wai, Hong Kong (CN)
(74) Representative: Gunzelmann, Rainer

(57) **Abstract**

Disclosed is a food processor comprising a bowl (10), a base unit (15), and weighing means (20, 25) provided at the base unit (15) and configured to weigh the bowl (10). The food processor may further comprise blades (30) provided in the bowl (10), a motor (35) provided in the base unit (15), and a coupling unit (40, 45) configured to couple the motor (35) with the blades (30) such that the motor (35) can rotate the blades (30). The coupling unit (40, 45) may comprise a first coupling member (40) provided at the bowl (10) and a second coupling member (45) provided at the base unit (15) and connected to the motor (35). The weighing means (20, 25) may be configured to exclusively weigh the bowl (10) when the first coupling member (40) and the second coupling member (45) are coupled to each other.

## Description

The present disclosure relates to a food processor having a weighing function. Specifically, the disclosure concerns a food processor comprising a bowl, a base unit, and weighing means provided at the base unit and configured to weigh the bowl.

Known food processors have a weighing sensor for weighing food items that are placed in the bowl of the food processor. In order to provide desired cooking results, it is important that the weighing sensors provides exact weighing results.

US 2022/0087479 A1 discloses a food processor having weighing sensors in the standing feet of the food processor. Since the weighing sensors measure the weight of the entire food processor, the accuracy of the measuring results may not be as exact as desired, in particular, for measuring small weight differences. In addition, the stirrer of the food processor causes strong vibrations which may cause the weighing sensors to wear out and provide inaccurate measuring results.

US 2018/0272300 A1 discloses a blender with an integrated scale. The blender can be operated in a weighing state and in a food operation state. For this, the blender comprises a blender clutch plate connectable with a motor clutch plate. For weighing ingredients placed in the blender, the blender clutch plate is disconnected from the motor clutch plate. For driving an agitator inside the blender by a motor, the blender clutch plate is coupled with the motor clutch plate.

The present disclosure is directed at the object of providing a food processor having an improved weighing function.

This object is addressed by a food processor as defined in claim 1. Further aspects of the present disclosure are defined in the dependent claims.

In the present disclosure, the terms "horizontal" and "vertical" are meant to also cover directions that are not exactly horizontal and vertical, i.e., directions that slightly deviate from horizontal and vertical, however, that are perpendicular, in particular, substantially perpendicular, to each other. Moreover, the terms "inward" and "outward" are meant to mean inward and outward with regard to a central axis of the food processor.

According to an aspect of the present disclosure, a food processor comprises a bowl, a base unit, and weighing means provided at the base unit and configured to weigh the bowl. The weighing means are configured to exclusively weigh the bowl when the bowl is placed in the base unit for food processing. Thus, when the bowl is placed in the base unit, weighing and/or food processing may be carried-out without requiring any further user interaction.

The food processor may further comprise blades provided in the bowl, a motor provided in the base unit, a coupling unit configured to couple the motor with the blades such that the motor can rotate the blades, wherein the coupling unit comprises a first coupling member provided at the bowl and a second coupling member provided at the base unit and connected to the motor, and the weighing means are configured to exclusively weigh the bowl when the first coupling member and the second coupling member are coupled to each other.

The food processor may be any kind of kitchen machine that can be used for processing food and which is capable of weighing a bowl and food items placed inside the bowl. The food processor is generally divided into a basic unit which is configured to stand on the ground (e.g., on a plurality of feet) and a removable bowl. The bowl may be a vessel made of stainless steel and comprise a lid for closing the bowl during cooking. In addition to the blades for stirring food placed in the bowl, the bowl may comprise an electrical heating element, for example, a heating film. For supplying the heating element with electricity, the bowl may comprise electrical contacts that are configured to be connected with corresponding electrical contacts in the base unit when placing the bowl on or in the base unit. In particular, the electrical contacts may be at the inner bottom surface of a scale element holding the bowl.

The base unit may comprise a housing. Inside the housing, there may be an electrical motor for driving the blades, and the weighing means for weighing the bowl. The motor may be provided at the bottom of the base unit. The food processor may further comprise the coupling unit connecting the base unit and the bowl, i.e., for transferring the rotational force generated by the motor to the blades. For this, the first coupling member is located in the bowl and the second coupling member is located in the base unit. When the bowl is placed in or on the base unit (e.g., a scale plate), the first coupling member and the second coupling member are coupled to each other. When the bowl is removed from the base unit, the first coupling member and the second coupling member are decoupled from each other. The base unit may comprise further items, like a microprocessor, a display, switches, etc.

According to a further development of the present disclosure, when the first coupling member and the second coupling member are coupled to each other, the weighing means are configured to exclusively weigh the bowl. This means that the weighing means only weigh the bowl (and its elements, i.e., the blades and the first coupling member) and food items placed in the bowl, however, not the base unit or any elements of the base unit except a scale element on which the bowl is placed. Since weighing of the base unit is avoided, deterioration of the weighing results due to deformation of the weighing means after long time usage can be avoided. In addition, it is noted that the higher the maximum load to be measured by the weighing means, the higher the maximum load of the weighing means must be designed. However, the higher the maximum load of the weighing means, the higher the measuring errors that may occur. Thus, it is desired to use weighing means that are designed for a low maximum load. Accordingly, more accurate weighing results can be obtained when generally weighing less load.

The weighing means may comprise a scale element and a plurality of load cells. The scale element may be configured to hold the bowl. The scale element may have a shape that holds the bowl in a stable manner. In particular, the bowl may be placed on the scale element for weighing the bowl. The scale element may have at its center an opening, e.g., a round opening, through which the coupling unit extends. Both the first coupling member and the second coupling member may extend through the scale element so that when the bowl is placed on the scale element, the first coupling member and the second coupling member are connected. Thus, when the bowl is placed in the base unit, there are only two connections between the bowl and the base unit, i.e., the bowl being placed on the scale element, and the first coupling member and the second coupling member being coupled with each other. The housing of the base unit may not be in contact with the scale element. Thus, the load cells only measure the weight of the bowl and what is placed into the bowl, and the weight of the scale element (which is relatively small). When nothing is placed in the bowl, the weight measurement result is calibrated to be zero grams. The weight measurement result may be shown on a display.

Preferably, the weighing means are located at a top area of the base unit. In particular, the weighing means may be located above the motor.

The load cells may be piezoelectric load cell sensors that are electrically connected. Respective electrical circuitry for driving the load cells and a processor for processing the measuring results may further be provided in the base unit. Preferably, the load cells are positioned symmetrically with regard to the scale element. For example, the weighing means may comprise four load cells. When the scale element has a rectangular shape, two load cells may be located at a first edge-side of the scale element and two load cells may be located at an opposite edge-side of the scale element. Moreover, each of the load cells may be mounted between the base unit, i.e., the housing of the base unit, and the scale element.

In order to provide accurate weighing results, each of the load cells of the plurality of load cells may be mounted at an inward-facing end of the load cell to the scale element and at an outward-facing end of the load cell to the base unit.

To further improve the accuracy of the weighing results, the scale element may be located above the plurality of load cells, and the base unit may be mounted under each of the load cells, i.e., each load cell is at least partially sandwiched between the scale element and a holder and/or the housing of the base unit.

In order to prevent load transfer from the bowl to the motor and deteriorate the weighing results, when the first coupling member and the second coupling member are coupled to each other and the bowl is empty, a horizontal gap between the first coupling member and the second coupling member may be present. Thereby, gravity force transfer to the load cells can be prevented. For example, the first coupling member may have a male shape and the second coupling member may have a female shape (or vice versa). When the first coupling member is being coupled with the second coupling member, the side walls of the first coupling member and the second coupling member that are in contact with other are aligned such that they slide against each other until the first coupling member and the second coupling member reach a stable attachment position. In this attachment position, the horizontal gap exists between a lower horizontally-extending wall of the first coupling member and an upper horizontally-extending wall of the second coupling member. Thus, the horizontal gap is a horizontally extending gap. Specifically, since misalignment between the first coupling member and the second coupling member may generate misaligned forces and transfer of such misaligned forces to the load cells, the first coupling member and the second coupling member are aligned with regard to each other along a central axis of the food processor.

When the bowl is empty, the horizontal gap may be between 1,5 mm to 2,5 mm, preferably 2.0 mm. Specifically, when the bowl is empty, the horizontal gap may be larger than when the bowl is filled with food items. However, when the bowl is filled to a maximum level with food items, there may still exist a horizontal gap, i.e., the lower wall of the first coupling member may not be in contact with the upper wall of the second coupling member. Thus, when adding food items to the bowl, the second coupling member may be fixed and the first coupling member may move vertically relative to the second coupling member. In particular, the measurement accuracy of the weighing means is not affected even if the vertical side walls of the first coupling member and the second coupling member get in contact with each other. Thus, after the motor is stopped, the measurement of the weighing means resumes to zero grams.

In addition to the vertical movability of the first coupling member relative to the second coupling member, when the first coupling member and the second coupling member are coupled to each other, the second coupling member may be configured to apply a rotational force on the first coupling member. For this, the first coupling member and the second coupling member may comprise structures, e.g., protrusions and recesses, that fit into each other so that a rotational force generated by the motor may be transferred via the second coupling member to the first coupling member and further to the blades. The structures (e.g., protrusions and recesses) may be provided on side walls of the first coupling member and the second coupling member facing each other. In addition, when the first coupling member and the second coupling member are coupled to each other, even when the second coupling member rotates the first coupling member and vibrations are caused, such vibrations may be counteracted by means of the first coupling member being able to move relative to the second coupling member, i.e., by varying the size of the horizontal gap along the central axis of the food processor.

In order to limit the load cells moving upwards and/or downwards during motor operation, i.e., to reduce a vibration force transfer to the load cells and cause damage of the load cells, at least one overload stopper may be foreseen, which is at least partially mounted between the scale element and one of the load cells of the plurality of load cells. For example, if the weighing means comprise four load cells, four overload stoppers may be provided. All overload stoppers may be identical. Thus, the at least one overload stopper provides a suspension mechanism that compensates high vibration during motor operation.

Each of the overload stopper may have an upper horizontal part, a lower horizontal part, and a vertical part connecting the upper horizontal part and the lower horizontal part. The load cell may be provided, i.e., sandwiched, between the upper horizontal part and the lower horizontal part. For example, an inward facing end of the upper horizontal part of the overload stopper may be sandwiched between an outward facing end of the scale plate and an inward facing end of the load cell. Thus, the overload stopper may have an L-shape. Moreover, the vertical part may be connected at an outward facing side to the base unit. In this case, the overload stopper may only be connected at an inward facing side to the scale plate (above) and the load cell (below), and at an outward facing side to the base unit, i.e., a housing of the base unit.

In addition, a spacing may be provided between the overload stopper and the load cell. The spacing may comprise a first horizontal spacing between the upper horizontal part and the load cell, a vertical spacing between a housing of the base unit and the load cell, and a second horizontal spacing between the lower horizontal part and the load cell. The first horizontal spacing, the vertical spacing, and the second horizontal spacing may be connected and form a single spacing. This, single spacing may have an L-shape. Thus, the overload stopper may provide protection for the load cells during overload situations, i.e., against upward and downward movements and vibrations.

In order to provide a stable load cell protection, the overload stopper may be made of stainless steel, in particular, a one-piece element made of stainless steel.

The foregoing summary, as well as the following detailed description of the embodiments, will be better understood when read in conjunction with the drawings. It will be understood that the invention is not limited to the specific embodiments disclosed, and reference is made to the claims for that purpose. In the drawings:
- Fig. 1: schematically shows a first embodiment of a food processor,
- Fig. 2: schematically shows a sectional view of the food processor according to Fig. 1,
- Fig. 3: schematically shows a second embodiment of a food processor,
- Fig. 4: schematically shows a third embodiment of a food processor, and
- Fig. 5: schematically shows a fourth embodiment of a food processor.

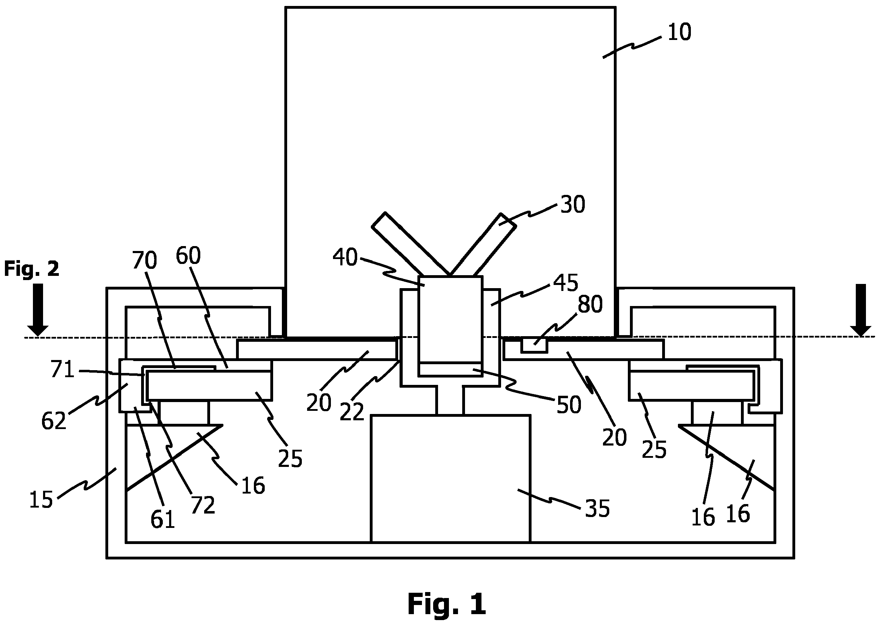

Fig. 1 schematically shows a first embodiment of a food processor. The food processor comprises a bowl 10, a base unit 15, weighing means 20, 25 provided in the base unit 15 and configured to weigh the bowl 10, blades 30 provided in the bowl 10, an electric motor 35 provided in the base unit 15 (at the inner bottom of the base unit 15), and a coupling unit 40, 45 configured to couple the motor 35 with the blades 30 such that the motor 35 can rotate the blades 30. The coupling unit 40, 45 comprises a first coupling member 40 provided at the bowl 10 and connected to the blades 30, and a second coupling member 45 provided at the base unit 15 and connected to the motor 35. Accordingly, the motor 35 can rotate the blades 30 via the first coupling member 40 and the second coupling member 45.

The weighing means 20, 25 are configured to exclusively weigh the bowl 10 and a scale element 20 when the first coupling member 40 and the second coupling member 45 are coupled to each other, i.e., the state shown in Fig. 1 when the bowl 10 is placed in the base unit 15. The bowl 10 may also be removed from the base unit 15 (not shown in the Figs.). In this case, the bowl 10 together with the first coupling member 40 and the blades 30 are removed from the base unit 15.

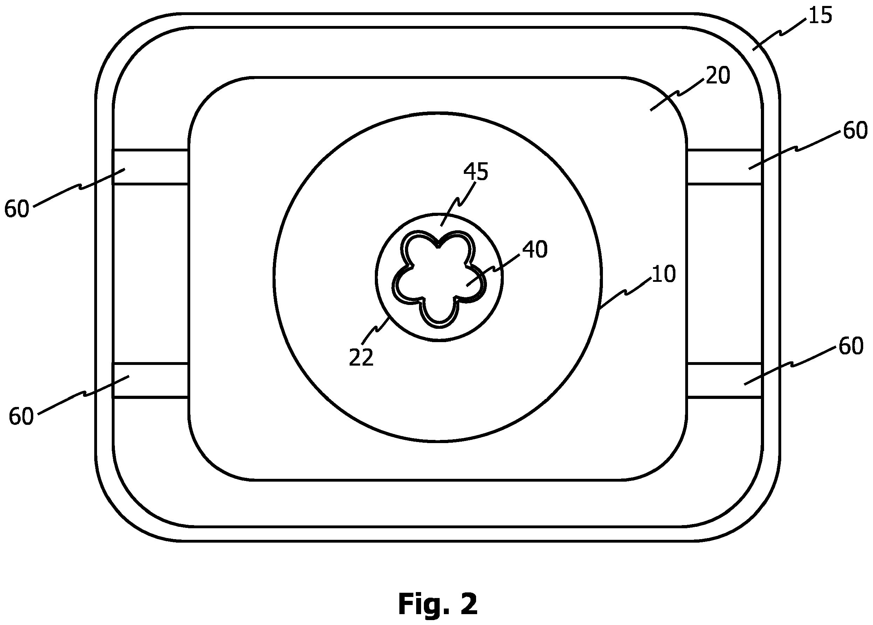

Fig. 2 schematically shows a sectional view of the food processor according to Fig. 1 along the dotted lines shown in Fig. 1. As can be seen from Figs. 1 and 2, the weighing means 20, 25 comprise the scale element 20 and four load cells 25. Each of the four load cells 25 extends horizontally. The scale element 20 is substantially rectangular. The scale element 20 is configured to hold the bowl 10. The scale element 20 has at its center a round opening 22 through which the first coupling member 40 and the second coupling member 45 extend. A heater socket 80 is mounted to the scale element 20. The bowl 10 comprises a heating element (not shown in Fig. 1) for heating food placed in the bowl 10. Two load cells 25 are located at one edge-side of the scale element 20 and two further load cells 25 are located at an opposite edge-side of the scale element 20. The load cells 25 at both sides have the same distance from each other. Each of the four load cells 25 is mounted between the base unit 15 and the scale element 20. Specifically, each of the four load cells 25 is mounted at an inward-facing end of the load cell 25 to the scale element 20 and at an outward-facing end of the load cell 25 to the base unit 15. In particular, the scale element 20 is located above the four load cells 25, and the base unit 15 is mounted under the four load cells 25. For this, the base unit 15 comprises four protrusions 16 that hold the four load cells 25 from below. The mounting of the load cells 25 to the scale element 20 and the protrusions 16 may be implemented by means of various connection techniques, like gluing, binding, screwing, etc.

Further elements not shown in Fig. 2 may be included in the bowl 10, for example a heating element and an electrical connector for supplying the heating element with electricity. Accordingly, a corresponding electrical connector may be provided at or in the scale element 20.

In the embodiment according to Fig. 1, the first coupling member 40 has a female shape (e.g., a cylindrical shape) and the second coupling member 45 has a male shape (e.g. a cylindrical shape). Specifically, as can be seen from Fig. 2, the outer vertically extending wall of the first coupling member 40 has a flower shape and the inner vertically extending wall of the second coupling member 45 as well as a flower shape matching the shape of the first coupling member 40. Thus, when the bowl 10 is placed on the scale element 20, the first coupling member 40 slides in a centrally aligned manner into the second coupling member 45 such that the first coupling member 40 is coupled to the second coupling member 45. This coupling state is shown in Fig. 1. In this coupling state, when the motor 35 rotates the second coupling member 45 around its vertical axis, by means of the coupling of the first coupling member 40 with the second coupling member 45, the blades 30 are rotated inside the bowl 10 around the central axis of the food processor. Because of the coupling, the rotation of the blades 30 by the motor 35 may be provided in both directions.

Moreover, as can be seen from Fig. 1, a horizontal gap 50 is provided between the first coupling member 40 and the second coupling member 45. For example, when the bowl 10 is not loaded with any food items, the weighing means 20, 25 measure a weight of zero grams. In this state, the horizontal gap 50 is 2,0 mm in the vertical direction. In case the bowl 10 is loaded with any food items for cooking, the horizontal gap 50 is reduced, for example, to 1,0 mm in the vertical direction. Accordingly, a suspension mechanism is provided, which prevents that the load and vibrations deteriorate the accuracy of the weighing.

It is noted that the height of the horizontal gap 50 is important. If the height in the vertical direction too large, the first coupling member 40 cannot correctly engage with the second coupling 45 so that the motor 35 may not be able to rotate the blades, in particular, when the bowl 10 is filled with sticky and/or heavy food items. On the other hand, if the height in the vertical direction is too small, the weight of the bowl 10 may rest on the coupling unit 40, 45 and the load cells 25 may provide inaccurate measurement results.

Thus, in the food processor shown in Figs. 1 and 2, the load cells 25 only measure the load of the bowl 10 and the scale element 20, and accurate weight measurement results can be provided.

In order to provide further damping and prevent a destruction of the load cells 25, overload stoppers 60, 61, 62 are provided. In particular for each of the four load cells 25, an overload stopper 60, 61, 62 is installed. Each overload stopper 60, 61, 62 is partially mounted between the scale element 20 and the load cell 25. Each overload stopper 60, 61, 62 has an upper horizontal part 60, a lower horizontal part 61, and a vertical part 62 connecting the upper horizontal part 60 and the lower horizontal part 61. The load cell 25 is provided between the upper horizontal part 60 and the lower horizontal part 61. The overload stopper 60, 61, 62 is one piece made of stainless steel. As can be seen, the overload stopper has an L-shape.

Moreover, there is a spacing 70, 71, 72 between the overload stopper 60, 61, 62 and the load cell 25. The spacing 70, 71, 72 comprises a first horizontal spacing 70 between the upper horizontal part 60 and the load cell 25, a vertical spacing 71 between a housing of the base unit 15 and the load cell 25, and a second horizontal spacing 72 between the lower horizontal part 61 and the load cell 25. The first horizontal spacing 70, the vertical spacing 71, and the second horizontal spacing 72 are connected and form a single spacing having an L-shape. Thus, the overload stopper 60, 61, 62 provides protection against overload situations of the bowl 10. Specifically, the overload stoppers 60, 61, 62 protect the load cells 25 against upward and downward movements and vibrations.

An inward facing end of the upper horizontal part 60 of the overload stopper is sandwiched between an outward facing end of the scale plate 20 and an inward facing end of the load cell 25. In addition, the vertical part 62 is connected at an outward facing side to the base unit 15. Accordingly, the overload stopper 60, 61, 62 is only connected at an inward facing side to the scale plate 20 (above) and the load cell 25 (below), and at an outward facing side to the base unit 15, i.e., the housing of the base unit 15.

The overload stoppers 60, 61, 62 are specifically configured such that the first horizontal spacing 70 is 120% to 150% of a nominal displacement of the load cell 25.

Thus, the load cells 25 are protected from being damaged and from providing inaccurate weight measurement results.

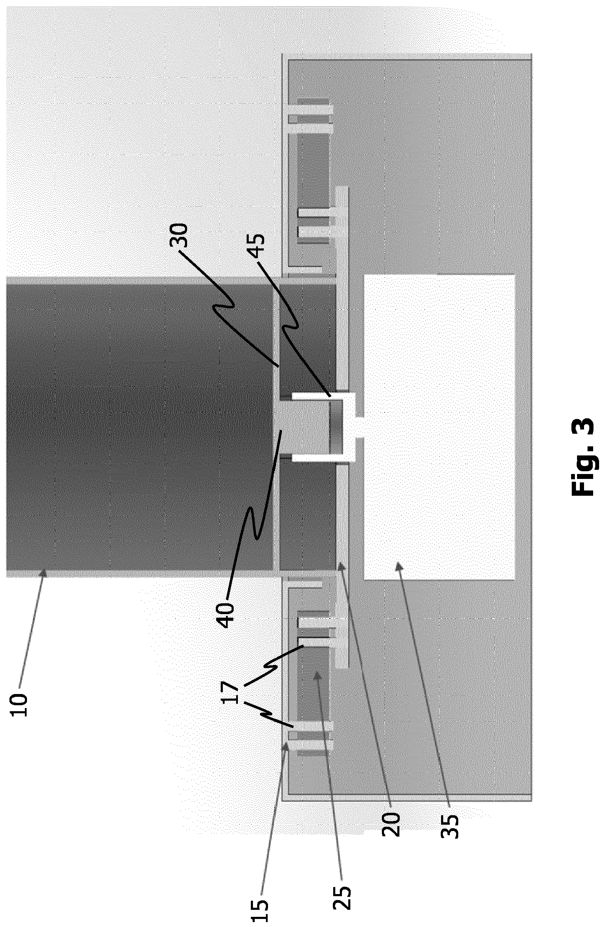

Fig. 3 shows a second embodiment of a food processor. The food processor shown in Fig. 3 is configured to only measure the weight of the bowl 10 and the weight of the scale element 20. In the second embodiment, the same reference numbers designate the same elements as in the food processor of Figs. 1 and 2.

The food processor of Fig. 3 differs from the food processor according to Figs. 1 and 2 in that no overload stoppers 60, 61, 62 are provided. However, the food processor according to Fig. 3 may be supplemented with the overload stoppers 60, 61, 62 shown in Figs. 1 and 2. Similar to Figs. 1 and 2, four load cells 25 are used that are located at the same locations as shown in Fig. 2.

Another difference concerns the structure and mounting of the weighing means 20, 25. As can be seen from Fig. 3, the load cells 25 are provided above the scale element 20. In particular, and inward facing end of the load cell 25 is connected with an outward facing end of the scale element 20. Moreover, an outward facing end of the load cell 25 is at its top connected to the base unit 15, i.e., the housing of the base unit 15. For this, two binders 17 are respectively provided in order to connect the load cell 25 to the housing of the base unit 15 and to the scale element 20.

Accordingly, the weighing means 20, 25 require less space in the base unit 15, however, still provide accurate weight measurement results.

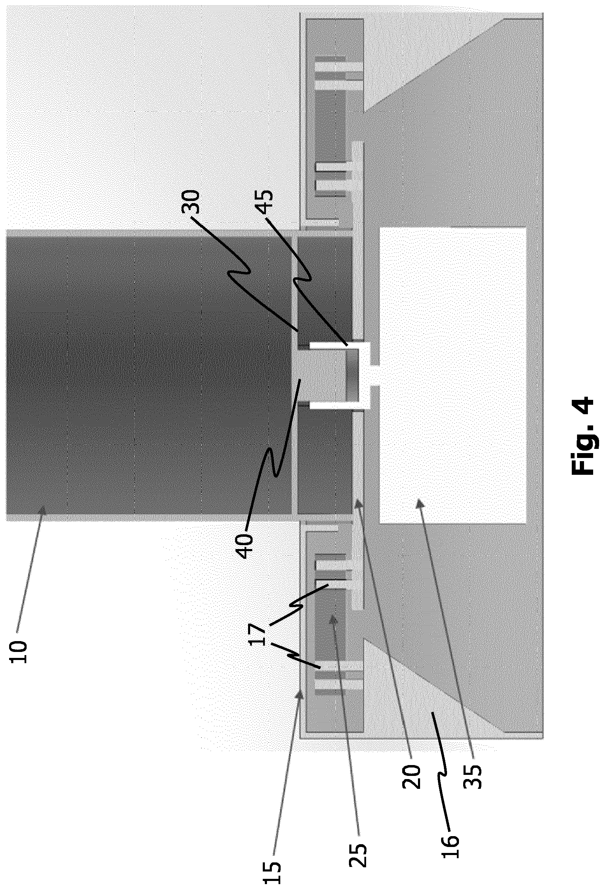

Fig. 4 shows a third embodiment of a food processor. In the third embodiment, the same reference numbers designate the same elements as in the food processors of Figs. 1 to 3.

The food processor shown in Fig. 4 is configured to only measure the weight of the bowl 10 and the weight of the scale element 20. The food processor of Fig. 4 differs from the food processor according to Figs. 1 and 2 in that no overload stoppers 60, 61, 62 are provided. However, the food processor according to Fig. 4 may be supplemented with the overload stoppers 60, 61, 62 shown in Figs. 1 and 2. Similar to Figs. 1 and 2, four load cells 25 are used that are located at the same locations as shown in Fig. 2.

Another difference concerns the structure and mounting of the weighing means 20, 25. As can be seen from Fig. 4, the load cell 25 is provided above the scale element 20 and above the protrusion 16 of the base unit 15. In particular, an inward facing end of the load cell 25 is connected from above with an outward facing end of the scale element 20. Moreover, an outward facing end of the load cell 25 is connected from above to the protrusion 16 of the base unit 15. As can be seen from Fig. 4, two binders 17 are respectively provided in order to connect the load cell 25 to the protrusion 16 of the base unit 15 and to the scale element 20.

Thus, the weighing means 20, 25 require less space at the top side in the base unit 15, however, still provide accurate weight measurement results.

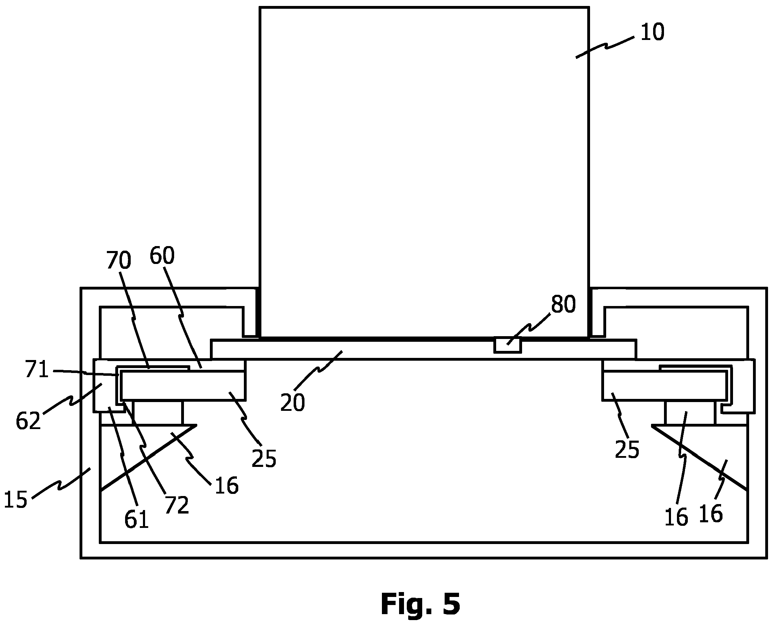

Fig. 5 shows a fourth embodiment of a food processor. In the fourth embodiment, the same reference numbers designate the same elements as in the food processors of Figs. 1 to 4.

The food processor of Fig. 5 differs from the food processor of Figs. 1 and 2 in that the food processor does not comprise any blades, coupling unit, and motor for driving the blades. Accordingly, the scale element 20 also does not comprise a central through hole for a coupling unit. The bowl 10 comprises a heating element (not shown in Fig. 5) for heating food placed in the bowl 10. The weighing means 20 and 25 provide the same technical advantages as the weighing means 20 and 25 shown in Figs. 1 to 4.

According to further embodiments of the present disclosure, similar to Fig. 5, in the embodiments of Figs. 3 and 4, the blades 30, the coupling unit 40, 45, and the motor 35 for driving the blades 30 may be omitted.

Although the present disclosure has been described in detail with reference to exemplary food processors, it should be understood that various changes, substitutions, and alterations can be made herein without departing from the invention as defined by the appended claims. The scope of the present disclosure is not intended to be limited to the particular food processors described herein.

## Claims

1. A food processor comprising:
a bowl (10);
a base unit (15); and
weighing means (20, 25) provided at the base unit (15) and configured to weigh the bowl (10), wherein
the weighing means (20, 25) are configured to exclusively weigh the bowl (10) when the bowl (10) is placed in the base unit (15) for food processing.

2. The food processor according to claim 1, further comprising
blades (30) provided in the bowl (10);
a motor (35) provided in the base unit (15);
a coupling unit (40, 45) configured to couple the motor (35) with the blades (30) such that the motor (35) can rotate the blades (30), wherein
the coupling unit (40, 45) comprises a first coupling member (40) provided at the bowl (10) and a second coupling member (45) provided at the base unit (15) and connected to the motor (35), and
the weighing means (20, 25) are configured to exclusively weigh the bowl (10) when the first coupling member (40) and the second coupling member (45) are coupled to each other.

3. The food processor according to claim 2, wherein
the weighing means (20, 25) comprise a scale element (20) and a plurality of load cells (25), and the scale element (20) has at its center an opening (22) through which the coupling unit (40, 45) extends.

4. The food processor according to claim 3, wherein
the scale element (20) is configured to hold the bowl (10), and the load cells (25) of the plurality of load cells are positioned symmetrically with regard to the scale element (20) and are mounted between the base unit (15) and the scale element (20).

5. The food processor according to claim 4, wherein
each of the load cells (25) of the plurality of load cells is mounted at an inward-facing end of the load cell (25) to the scale element (20) and at an outward-facing end of the load cell (25) to the base unit (15).

6. The food processor according to any of claims 3 to 5, wherein
the scale element (20) is located above the plurality of load cells (25), and the base unit (15) is mounted under each of the load cells (25).

7. The food processor according to any of claims 3 to 6, wherein the weighing means (20, 25) comprise four load cells (25) and/or the scale element (20) has a shape configured to hold the bowl (10) in a stable manner.

8. The food processor according to any of the preceding claims, wherein
when the first coupling member (40) and the second coupling member (45) are coupled to each other and the bowl (10) is empty, there is a horizontal gap (50) between the first coupling member (40) and the second coupling member (45).

9. The food processor according to claim 8, wherein
when the bowl (10) is empty, the horizontal gap (50) is larger than when the bowl (10) is filled.

10. The food processor according to claim 9, wherein
the horizontal gap (50) is between 1,5 mm to 2,5 mm, preferably 2.0 mm.

11. The food processor according to any of the preceding claims, wherein
when the first coupling member (40) and the second coupling member (45) are coupled to each other, the second coupling member (45) is configured to apply a rotational force on the first coupling member (40).

12. The food processor according to any of claims 2 to 11, further comprising
at least one overload stopper (60, 61, 62) at least partially mounted between the scale element (20) and one of the load cells (25) of the plurality of load cells.

13. The food processor according to claim 12, wherein
the overload stopper (60, 61, 62) has an upper horizontal part (60), a lower horizontal part (61), and a vertical part (62) connecting the upper horizontal part (60) and the lower horizontal part (61), wherein the load cell (25) is provided between the upper horizontal part (60) and the lower horizontal part (61).

14. The food processor according to claim 13, further comprising
a spacing (70, 71, 72) between the overload stopper (60, 61, 62) and the load cell (25), wherein the spacing (70, 71, 72) comprises a first horizontal spacing (70) between the upper horizontal part (60) and the load cell (25), a vertical spacing (71) between a housing of the base unit (15) and the load cell (25), and a second horizontal spacing (72) between the lower horizontal part (61) and the load cell (25).

15. The food processor according to any of claims 12 to 14, wherein
the overload stopper (60, 61, 62) is made of stainless steel.

## Amended claims

### Amended claims in accordance with Rule 137(2) EPC.

1. A food processor comprising:
a bowl (10);
a base unit (15);
weighing means (20, 25) provided at the base unit (15) and configured to weigh the bowl (10);
a motor (35) provided in the base unit (15); and
a coupling unit (40, 45) configured to couple the motor (35) with the blades (30) such that the motor (35) can rotate the blades (30), wherein
the coupling unit (40, 45) comprises a first coupling member (40) provided at the bowl (10) and a second coupling member (45) provided at the base unit (15) and connected to the motor (35), and
the weighing means (20, 25) are configured to exclusively weigh the bowl (10) when the first coupling member (40) and the second coupling member (45) are coupled to each other, wherein the exclusive weighing of the bowl (10) means that the weighing means (20, 25) only weigh the bowl (10) and food items placed in the bowl (10), however, not the base unit (15),
**characterized in that**
the bowl (1) comprises a heating element; and
the weighing means (20, 25) comprise a scale element (20) configured to hold the bowl (10), wherein a heater socket (80) for supplying electricity to the heating element is mounted to the scale element (20).

2. The food processor according to claim 1, wherein
the weighing means (20, 25) comprise a plurality of load cells (25), and the scale element (20) has at its center an opening (22) through which the coupling unit (40, 45) extends.

3. The food processor according to claim 2, wherein
the load cells (25) of the plurality of load cells are positioned symmetrically with regard to the scale element (20) and are mounted between the base unit (15) and the scale element (20).

4. The food processor according to claim 3, wherein
each of the load cells (25) of the plurality of load cells is mounted at an inward-facing end of the load cell (25) to the scale element (20) and at an outward-facing end of the load cell (25) to the base unit (15).

5. The food processor according to any of claims 2 to 4, wherein
the scale element (20) is located above the plurality of load cells (25), and the base unit (15) is mounted under each of the load cells (25).

6. The food processor according to any of claims 2 to 5, wherein the weighing means (20, 25) comprise four load cells (25) and/or the scale element (20) has a shape configured to hold the bowl (10) in a stable manner.

7. The food processor according to any of the preceding claims, wherein
when the first coupling member (40) and the second coupling member (45) are coupled to each other and the bowl (10) is empty, there is a horizontal gap (50) between the first coupling member (40) and the second coupling member (45).

8. The food processor according to claim 7, wherein
when the bowl (10) is empty, the horizontal gap (50) is larger than when the bowl (10) is filled.

9. The food processor according to claim 8, wherein
the horizontal gap (50) is between 1,5 mm to 2,5 mm, preferably 2.0 mm.

10. The food processor according to any of the preceding claims, wherein
when the first coupling member (40) and the second coupling member (45) are coupled to each other, the second coupling member (45) is configured to apply a rotational force on the first coupling member (40).

11. The food processor according to any of claims 1 to 10, further comprising
at least one overload stopper (60, 61, 62) at least partially mounted between the scale element (20) and one of the load cells (25) of the plurality of load cells, wherein the at least one overload stopper (60, 61, 62) is configured to provide a suspension mechanism that compensates high vibration during a motor operation.

12. The food processor according to claim 11, wherein
the overload stopper (60, 61, 62) has an upper horizontal part (60), a lower horizontal part (61), and a vertical part (62) connecting the upper horizontal part (60) and the lower horizontal part (61), wherein the load cell (25) is provided between the upper horizontal part (60) and the lower horizontal part (61).

13. The food processor according to claim 12, further comprising
a spacing (70, 71, 72) between the overload stopper (60, 61, 62) and the load cell (25), wherein the spacing (70, 71, 72) comprises a first horizontal spacing (70) between the upper horizontal part (60) and the load cell (25), a vertical spacing (71) between a housing of the base unit (15) and the load cell (25), and a second horizontal spacing (72) between the lower horizontal part (61) and the load cell (25).

14. The food processor according to any of claims 11 to 13, wherein
the overload stopper (60, 61, 62) is made of stainless steel.
